Europäisches Patentamt

European Patent Office

Office européen des brevets

(11) Publication number: **0 053 522**
**B1**

# (12) EUROPEAN PATENT SPECIFICATION

(45) Date of publication of patent specification: **08.07.87**

(51) Int. Cl.⁴: **B 60 C 9/08**

(21) Application number: **81305701.5**

(22) Date of filing: **03.12.81**

(54) Pneumatic tires.

(30) Priority: **03.12.80 JP 169658/80**
**03.12.80 JP 169659/80**

(43) Date of publication of application:
**09.06.82 Bulletin 82/23**

(45) Publication of the grant of the patent:
**08.07.87 Bulletin 87/28**

(84) Designated Contracting States:
**FR GB SE**

(56) References cited:
**FR-A-1 296 073**
**FR-A-1 382 994**
**FR-A-2 162 667**
**LU-A- 68 166**
**US-A-1 767 502**
**US-A-2 925 846**
**US-A-3 100 518**
**US-A-3 306 331**

(73) Proprietor: **BRIDGESTONE TIRE COMPANY LIMITED**
**10-1, Kyobashi 1-Chome Chuo-Ku**
**Tokyo (JP)**

(72) Inventor: **Matsumoto, Kenji**
**2800-1, Ogawahigashi-Cho**
**Kodaira City Tokyo (JP)**
Inventor: **Suzuki, Yasuo**
**1562-19, Ninomiya Akigawa City**
**Tokyo (JP)**

(74) Representative: **Whalley, Kevin et al**
**MARKS & CLERK 57/60 Lincoln's Inn Fields**
**London WC2A 3LS (GB)**

Courier Press, Leamington Spa, England.

## Description

This invention relates to pneumatic tires, and more particularly to pneumatic tires having a high resistance to cut growth, which are to be used on vehicles intended to be run at least partly on rough roads which are liable to cause cut failure in such a tire. In particular the invention relates to tires of this type having an improved performance against cut damage when applied to for example construction trucks and dump trucks.

Since tires of this type are mainly used on rough roads, the tire body, particularly the side portion thereof, is frequently subjected to cut damage due to contacting with for example sharp stones and rocks, pieces of broken metal, and stubs remaining after tree felling. When such cut damage occurs, this damage gradually grows with the continuous running of the tire and proceeds into the inside of the tire and finally arrives at the carcass layer, whereby separation failure of the carcass ply or plies constituting the carcass layer is caused. Alternatively, the cut damage further penetrates beyond the carcass layer into the inside of the tire to cause air leakage.

In general, the risk of causing the above failures tends to be higher in the side portion of the tire than in the crown portion thereof because the side portion is relatively unprotected as compared with the crown portion provided with a thick tread rubber and reinforced with a belt or breaker layer. Further, the likelihood of cut damage occurring is greater in the side portion of pneumatic radial tires having a carcass layer of radial structure and a belt layer superimposed thereon, wherein the carcass layer is composed of at least one rubberized ply, each ply containing steel cords arranged substantially parallel to the radial plane of the tire, and wherein the belt layer has a high circumferential rigidity.

Various attempts have been made to overcome such cut damage as well as the resulting separation failure of the carcass and air leakage from the tire, but none of these has proved to be satisfactory.

For example, a reinforcing cord layer of fibre material may be disposed in the side portion of the tire outside the carcass layer to make the depth of side cut damage shallow, as disclosed in Japanese Patent laid open No. 651/72. In this case, the effect of preventing cut damage itself is improved to some extent, but once cut damage is caused the growth of such cut damage cannot be prevented and further the separation failure is apt to occur from the end of the reinforcing cord layer. A similar result is caused even when the cord of the reinforcing cord layer is composed of metallic material.

As disclosed in Japanese Patent Application Publication No. 13,322/72, a rubber swollen portion may be disposed in a region extending from the shoulder portion of the tire to the side portion thereof to prevent side cuts. In this case, protection of the tire side portion side is effectively attained to some extent, but again once cut damage is caused the growth of such cut damage cannot be prevented.

Also, a thick rubber layer may be disposed in the side portion of the tire inside the carcass layer, as disclosed in Japanese Patent Application Publication No. 40,483/70. In this case, it is anticipated that the rubber layer prolongs the time until air leakage is caused after the occurrence of cut damage, but the growth of the cut damage cannot basically be prevented. Therefore, the arrangement of the rubber layer does not sufficiently contribute to improve the resistance to air leakage. Furthermore, the increase of the thickness of the rubber layer increases the heat generation and the strain applied to the bead portion of the tire and also the end portion of the belt layer is increased, and as a result the durability of the tire is adversely affected and the production becomes difficult and the cost is increased.

U.S. Patent No. US—A—1767502 (according to the preamble of claim 1) describes forming a separable non-adhesion region between the tire casing and a liner at the tread portion of a tire, whereby the penetration of a foreign object into the inner surface of the tire is prevented when the tread portion is pierced with a foreign object such as a nail.

It is apparent that a tire mounted on a vehicle running on a rough road, particularly the side portion thereof, is unavoidably subjected to cut damage to some extent. The present invention therefore aims to obviate the various drawbacks of the prior art as described above by preventing the growth of cut damage to the tire side portion to improve the prevention of air leakage of the tire and further the prevention of separation failure of the carcass ply without adversely affecting the other tire performances.

As a result of many experiments and various investigations, the present inventors have found that if a fault surface having an extremely low adhesion is provided at the interior of the rubber layer of the tire, crack growth from the outer surface of the rubber layer is blocked by the fault surface.

The present invention provides a pneumatic tire, comprising a crown portion including a tread, a pair of side portions extending from the crown portion, a pair of bead portions located at the respective ends of the side portions remote from the crown portion, a carcass layer composed of at least one rubberized cord ply toroidally extending between the bead portions, and a liner layer disposed inside and adjacent the carcass layer, the liner layer consisting mainly of a rubbery elastomeric layer and comprising a fault surface, characterized in that the said fault surface is provided in the liner layer at at least the region of a tire side portion, for intercepting crack growth from the outside of the tire, and in that the two parts of the liner layer which interpose the fault surface between then are adhered to each other such that the said fault surface has a peeling resistant force of not more than 7.5 Kp/cm per unit breadth.

The term "liner layer" as used herein means a reinforcing layer consisting mainly of a rubbery elastomer layer located adjacent to and at the inside of the carcass layer, other than an inner liner provided at the innermost portion of the tire for sealing.

The invention will be further described, by way of example only, with reference to the accompanying drawings, wherein:

Figure 1 is a partial cross-sectional view showing the state where the growth of a crack is intercepted by a fault surface having an extremely low adhesion;

Figure 2 is a partial cross-sectional view of an essential portion of one embodiment of a tire of the present invention;

Figure 3 is a left half cross-sectional view of an embodiment of a tire according to the present invention; and

Figure 4 is a graph of a test result showing the effect of the present invention.

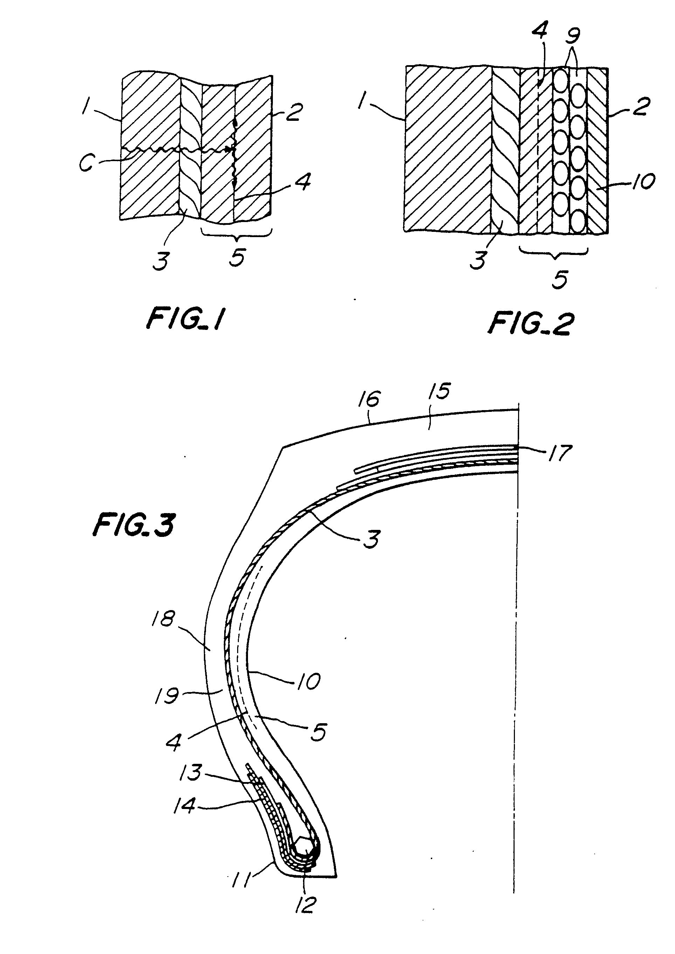

As shown in Figure 1, the growth and penetration of a crack C due to cut damage from the outer surface 1 of a tire toward the inner surface 2 is diverged along a fault surface 4 having an extremely low adhesion as shown by a zigzag arrow mark, by providing the fault surface 4 in a liner layer 5 disposed inside and adjacent to a carcass layer 3. As a result, the growth and penetration of the crack toward the inner surface 2 of the tire is intercepted.

It is most effective if the fault surface 4 in the present invention is provided at the side portion of the pneumatic tire to be used for running on rough grounds, at or near the position corresponding to maximum sectional width of. the carcass layer in the side portion, especially in the case of radial tires.

The fault surface is preferably provided at at least the region of a tire side portion including the maximum sectional width of the carcass layer.

The fault surface may also be provided over the whole region of a tire side portion extending from the upper part of the bead portion to the shoulder portion of the tire.

If a fault surface 4 is provided outside the carcass layer 3, there is a danger of separation being caused because this portion undergoes particularly large deformation, and therefore the fault surface 4 is formed in at least one portion of the inner part of the liner layer 5 itself provided inside and adjacent to the carcass layer 3 and between the layer 5 and the carcass layer 3.

The fault surface is preferably a boundary surface in the liner layer 5 and adjacent the carcass layer 3.

The fault surface 4 has a peeling resistant force of not more than 7.5 kp/cm, preferably not more than 5 kp/cm, per unit breadth and when the peeling resistant force exceeds 7.5 kp/cm the effect of intercepting the crack growth is not satisfactorily obtained.

It will be appreciated that the two layers which interpose the fault surface 4 between them are adhered to each other and the separation of these layers does not occur from the fault surface 4 so long as the cut growth from the outside of the tire does not reach the fault surface under the normal use condition of tires of this type.

When the fault surface is formed between two or more rubbery elastomeric layers forming the liner layer 5, the 100% modulus of the rubber elastomeric layer disposed inside and adjacent the fault surface is preferably not less than 20 kp/cm$^2$, more preferably not less than 45 kp/cm$^2$, to assist the prevention of crack growth.

Furthermore, it is preferable that the liner layer 5 includes a cord reinforcing layer 9 consisting of at least one rubberized cord ply as shown in Figure 2. This is because when the tire is subjected to cut damage the circumferential strain owing to load concentrates at this cut damage portion, but the above described cord reinforcing layer 9 serves to prevent this concentration. In this case, it is preferable to locate the cord reinforcing layer inside the fault service 4 in view of the mitigation of strain concentration. In particular, when the carcass layer 3 is of radial structure, it is preferable to cross the cords in the cord reinforcing layer 9 with the cords in the carcass layer 3 at an angle of not greater than 35°. It will be apparent that Figure 2 shows the case where the fault surface 4 is formed in the interior of the liner layer 5, the numeral 10 indicating an inner liner.

The fault surface 4 may be easily formed by a simple process wherein for example silicone or petroleum is applied on a bonding surface when the green case of the tire is formed.

In the tire according to the invention, the carcass layer 3 is preferably a radial carcass made of metal cords.

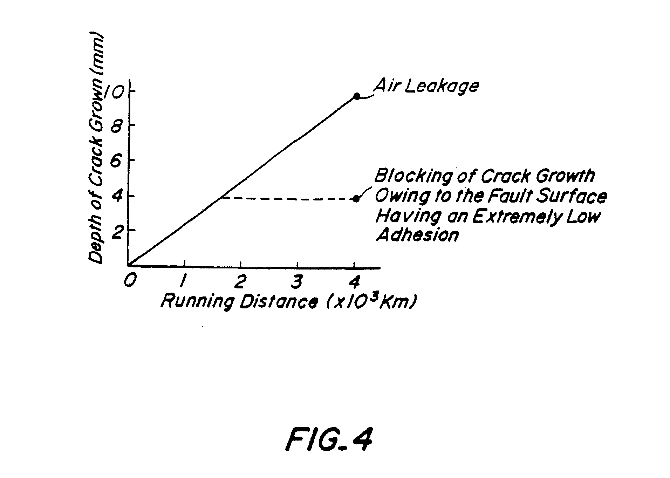

Figure 3 shows in cross-section the left half of a pneumatic radial tire of size 20.5 R 20 for running on rough grounds; the right half of the tire has the same structure as the left half.

In this case, a carcass layer 3 consists of one rubberized ply containing steel cords embedded therein and arranged along the radial plane of the tire and is turned around a bead core 12 in a bead portion 11 for fitting to a rim (not shown) from the inside to the outside thereof. In the bead portion 11 are further arranged a metal chafer 13 composed of one rubberized layer containing steel cord embedded therein, and a fibre chafer 14 composed of two rubberized layers each containing nylon cords embedded therein, the cords of which are crossed with each other, as a reinforcement. In an annular crown portion 15 a belt layer 17 composed of three steel cord plies is arranged between the carcass layer 3 and the tread 16. .

At the innermost surface of the tire, an inner liner 10 is provided between both the left and right bead portions, and a liner layer 5 is disposed between the inner liner 10 and the carcass layer 3.

In the tire illustrated in Figure 3, the liner layer 5 is mainly composed of a rubbery elastomeric layer having a 100% modulus of 25 kp/cm$^2$ (300% modulus of 65 kp/cm$^2$), and provided at its inside with a cord reinforcing layer (not shown) of two cord plies extending from the bead portion 11 to the shoulder portion of the tire, the cords of which plies are crossed at an angle of 15° with respect to the radial direction of the tire.

A fault surface 4 having an extremely low adhesion is formed at the interior of the liner layer 5 near a position corresponding to substantially the maximum sectional width of the carcass layer in the side portion of the tire. This fault surface 4 is formed by applying petroleum when forming the green case. In this embodiment fault surfaces having an extremely low adhesion are provided at both the left and right tire side portions but a fault surface may be formed only in one side portion.

Figure 2 is essentially a diagrammatic view showing the arranging relation of each layer in the side portion of maximum sectional width in the embodiment of Figure 3.

A durability test on a drum was made with respect to the tire as shown in Figure 3 to obtain a result as shown in Figure 4, wherein a solid line indicates the result obtained in the case of a comparative tire and a broken line indicates the result obtained in the case of the tire shown in Figure 3. The comparative tire has the same structure as the tire shown in Figure 3 except for the absence of the fault surface. In this test, cut damage was first formed in the side portion of the tire near the maximum width thereof to such a depth that the tip of the cut damage was located slightly outside the carcass layer 3, and then the depth of a crack grown from the cut damage during running of the tire was measured in a direction perpendicular to the carcass ply.

As apparent from Figure 4, the tire of Figure 3 is clearly superior to the comparative tire. That is, in the comparative tire having no fault surface, the crack grew with increase of the running distance and finally air leakage occurred after a running distance of about $4 \times 10^3$ km. On the other hand, in the tire of Figure 3, the crack growth was intercepted by the fault surface 4 and as a result no air leakage occurred even at the same running distance as described above.

Thus when a pneumatic tire according to the invention for use on an off-road vehicle is subjected to cut damage, the growth of the cut damage is effectively intercepted and air leakage failure or separation failure can be advantageously prevented without adversely affecting other tire performances.

## Claims

1. A pneumatic tire, comprising a crown portion (15) including a tread (16), a pair of side portions (18) extending from the crown portion, a pair of bead portions (11) located at the respective ends of the side portions remote from the crown portion, a carcass layer (3) composed of at least one rubberized cord ply toroidally extending between the bead portions, and a liner layer (5) disposed inside and adjacent the carcass layer, the liner layer (5) consisting mainly of a rubbery elastomeric layer and comprising a fault surface (4), characterized in that the said fault surface (4) is provided in the liner layer (5) at at least the region of a tire side portion (18), for intercepting crack growth from the outside of the tire, and in that the two parts of the liner layer (5) which interpose the fault surface (4) between them are adhered to each other such that the said fault surface (4) has a peeling resistant force of not more than 7.5 Kp/cm per unit breadth.

2. A tire as claimed in claim 1, characterized in that the fault surface (4) is provided at at least the region of the tire side portion (18) including the maximum sectional width of the carcass layer (3).

3. A tire as claimed in claim 1, characterized in that the fault surface (4) is provided over the whole region of the tire side portion (18) extending from the upper part of the bead portion (11) to the shoulder portion of the tire.

4. A tire as claimed in any of claims 1 to 3, characterized in that the fault surface is a boundary surface in the liner layer (5) and adjacent the carcass layer (3).

5. A tire as claimed in any of claims 1 to 4, characterized in that the liner layer (5) comprises two or more rubbery elastomeric layers, that the fault surface (4) is formed between two adjacent said rubbery elastomeric layers, and that the 100% modulus of the rubbery elastomeric layer disposed inside and adjacent the fault surface (4) is not less than 20 Kp/cm².

6. A tire as claimed in any of claims 1 to 5, characterized in that the liner layer (5) is provided with at least one cord reinforcing layer (9) at the inside of the fault surface (4).

7. A tire as claimed in claim 6, characterized in that the cords in the said cord reinforcing layer (9) in the liner layer (5) cross with the cords in the carcass layer (3) at an angle of not greater than 35°.

8. A tire as claimed in any of claims 1 to 7, characterized in that the carcass layer (3) is a radial carcass made of metal cords.

**Patentansprüche**

1. Luftreifen, mit einem Zenitabschnitt (15), einschließlich einer Lauffläche (16), einem Paar vom Zenitabschnitt ausgehender Seitenabschnitte (18), einem Paar Wulstabschnitt (11) an den zugehörigen, dem Zenitabschnitt abgewandten Enden der Seitenabschnitte, einer Karkassenschicht (3) aus wenigstens einer gummierten Cordeinlage, die sich toroidförmig zwischen den Wulstabschnitten erstreckt, und einer Verkleidungsschicht (5) auf der Innenseite der Karkassenschicht und ihr benachbart, wobei die Verkleidungsschicht (5) hauptsächlich aus einer gummielastischen Schicht besteht und eine Pannenfläche (4) umfaßt, dadurch gekennzeichnet, daß die Pannenfläche (4) in der Verkleidungsschicht (5) wenigstens im Bereich eines Luftreifen-Seitenabschnitts (18) zum Aufhalten von von der Reifenaußenseite ausgehendem Rißwachstum vorgesehen ist, und daß die beiden Teile der Verkleidungsschicht (5), welche die Pannenfläche (4) zwischen sich einschließen, so miteinander verklebt sind, daß die Pannenfläche (4) einen Ablösewiderstand von nicht mehr als 7,5 kp/cm je Breiteneinheit hat.

2. Luftreifen nach Anspruch 1, dadurch gekennzeichnet, daß die Pannenfläche (4) wenigstens in dem Bereich des Luftreifen-Seitenabschnitts (18) vorgesehen ist, in dem die größte Querschnittsbreite der Karkassenschicht (3) gelegen ist.

3. Luftreifen nach Anspruch 1, dadurch gekennzeichnet, daß die Pannenfläche (4) über dem gesamten Bereich des Luftreifen-Seitenabschnitts (18) vorgesehen ist, der sich vom oberen Teil des Wulstabschnitts (11) bis zum Schulterabschnitt des Luftreifens erstreckt.

4. Luftreifen nach einem der Ansprüche 1 bis 3, dadurch gekennzeichnet, daß die Pannenfläche eine Grenzfläche in der Verkleidungsschicht (5) und in der Nachbarschaft der Karkassenschicht (3) ist.

5. Luftreifen nach einem der Ansprüche 1 bis 4, dadurch gekennzeichnet, daß die Verkleidungsschicht (5) zwei oder mehr gummielastische Schichten umfaßt, daß die Pannenfläche (4) zwischen zwei benachbarten gummielastischen Schichten ausgebildet ist, und daß der 100-%-Modul der auf der Innenseite der Pannenfläche (4) und ihr benachbart angeordneten gummielastischen Schicht nicht weniger als 20 kp/cm$^2$ beträgt.

6. Luftreifen nach einem der Ansprüche 1 bis 5, dadurch gekennzeichnet, daß die Verkleidungsschicht (5) mit wenigstens einer Cord-Verstärkungsschicht (9) auf der Innenseite der Pannenfläche (4) versehen ist.

7. Luftreifen nach Anspruch 6, dadurch gekennzeichnet, daß die Corde in der Cord-Verstärkungsschicht (9) in der Verkleidungsschicht (5) mit den Corden in der Karkassenschicht (3) unter einem Winkel nicht größer als 35° gekreuzt sind.

8. Luftreifen nach einem der Ansprüche 1 bis 7, dadurch gekennzeichnet, daß die Karkassenschicht (3) eine Karkasse in Radial-Bauart aus Corden aus Metall ist.

**Revendications**

1. Pneumatique, comportant une couronne (15) comprenant une bande de roulement (16), une paire de parties latérales (18) s'étendant à partir de la couronne, une paire de parties formant talons (11) situées au niveau des extrémités respectives des parties latérales distantes de la partie de sommet, une couche formant carcasse (3) constituée par au moins une nappe de câblés caoutchoutés s'étendant avec une forme toroïdale entre les parties formant talons, et une couche formant garniture (5) disposée à l'intérieur et au voisinage de la couche formant carcasse, la couche formant garniture (5) étant constituée principalement par une couche d'un élastomère caoutchouteux et comportant une surface (4) de blocage de défauts, caractérisé en ce que ladite surface (4) de blocage de défauts, caractérisé en ce que ladite surface (4) de blocage de défauts est prévue dans la couche (5) formant garniture au moins dans la région d'une partie latérale (18) du pneumatique, de manière à bloquer la croissance de fissures en provenance de l'extérieur du pneumatique, et en ce que les deux parties de la couche formant garniture (5), qui enserrent entre elles la surface (4) de blocage de défauts, adhèrent l'une à l'autre de telle sorte que ladite surface (4) de blocage de défauts résiste à une force de décollement non supérieure à 7,5 kp/cm par unité de largeur.

2. Pneumatique selon la revendication 1, caractérisé en ce que la surface (4) de blocage de défauts est prévue au moins dans la région de la partie latérale (18) du pneumatique, dans laquelle la couche formant carcasse (3) possède sa largeur maximale en coupe.

3. Pneumatique selon la revendication 1, caractérisé en ce que la surface (4) de blocage de défauts est prévue sur l'ensemble de la région de la partie latérale (18) du pneumatique, qui s'étend depuis l'élément supérieur de la partie formant talon (11) jusqu'à la partie formant épaulement du pneumatique.

4. Pneumatique selon l'une quelconque des revendications 1 à 3, caractérisé en ce que la surface (4) de blocage de défauts est une surface limite située dans la couche formant garniture (5) et adjacente à la couche formant carcasse (3).

5. Pneumatique selon l'une quelconque des revendications 1 à 4, caractérisé en ce que la couche formant garniture (5) comporte deux couches ou plus constituées en un élastomère caoutchouteux, en ce que la surface (4) de blocage de défauts est formée entre deux couches faisant partie desdites couches voisines constituées en un élastomère caoutchouteux et en ce que le module à 100 % de la couche constituée par un élastomère caoutchouteux et disposée à l'intérieur et au voisinage de la surface (4) de blocage de défauts n'est pas inférieur à 20 kp/cm$^2$.

6. Pneumatique selon l'une quelconque des revendications 1 à 5, caractérisé en ce que la couche formant garniture (5) est munie d'au moins une couche de renforcement en câblés (9) sur le côté intérieur de la surface (4) de blocage de défauts.

7. Pneumatique selon la revendication 6, caractérisé en ce que les câbles situés dans ladite couche de renforcement en câblés (9) située dans la couche formant garniture (5) croisent les câblés situés dans la couche formant carcasse (3), sous un angle non supérieur à 35°.

8. Pneumatique selon l'une quelconque des revendications 1 à 7, caractérisé en ce que la couche formant carcasse (3) est une carcasse radiale constituée par des câblés métalliques.

0 053 522

FIG_1

FIG_2

FIG_3

0 053 522

FIG. 4

2